# EUROPEAN PATENT SPECIFICATION

(11) **EP 2 905 485 B1**
(45) Date of publication and mention of the grant of the patent: **30.12.2020**
(21) Application number: 15154177.8
(22) Date of filing: 06.02.2015
(51) Int. Cl.: F16D 3/84, F16C 23/04

(54) **Seal and anchor system for spherical bearings**
Dichtung und Ankersystem für Pendelkugellager
Joint d'étanchéité et système d'ancrage pour des paliers rotulants

(30) Priority: 07.02.2014 US 201461936952 P
(43) Date of publication of application: 12.08.2015
(73) Proprietor: Schaublin SA, 2800 Delemont (CH)
(72) Inventor: Charmillot, Philippe, 2832 Rebeuvelier (CH)
(74) Representative: Bjerkéns Patentbyrå KB (Stockholm)

(56) References cited:
- WO-A1-2013/000517
- WO-A1-2013/117238
- WO-A1-2013/143582
- CA-A1- 2 842 677
- US-A- 2 593 253
- US-A- 3 225 420
- US-A- 3 700 297

## Description

### Field

The present invention relates generally to the field of spherical bearings, and more specifically to a spherical bearing assembly with a seal according to the appended claims, see documents WO2013/143582 and WO2013/000517 showing a bearing assembly as described in the preamble of claim 1. The invention is configured for use in, but not limited, a steering linkage assembly of a vehicle and in railway vehicles.

### Background

Angular contact spherical plain bearings are designed to support heavy unidirectional thrust and combination radial/thrust loads. Wear occurs on bearing engagement surfaces which are in sliding contact with one another. High loads can accelerate the rate at which wear occurs. Traditional bearings have metal-on-metal sliding engagement surfaces. Such bearings require lubrication to reduce friction between the sliding engagement surfaces. If the surface is not properly lubricated the bearing and any associated machinery can be irreparably damaged.

Spherical plain bearings typically have an inner member, for example an inner ring, inner race or ball, positioned in an outer member, for example an outer ring, outer race or housing. The outer member defines an inner engagement surface contoured to receive the inner member therein which defines an outer surface, a portion or all of which defines an outer engagement surface. A lubricant, such as grease, is typically provided between the outer member and inner member to reduce friction during operation. To reduce the need for lubrication, or in lieu of using a lubricant, a low friction treatment is applied to one or more of the outer member inner engagement surface and the inner member outer engagement surface. Another method for reducing the need for lubrication includes installing or applying a self-lubricating coating or liner to one or more of the outer member inner engagement surface and the inner member outer engagement surface.

Despite recent improvements in this technology, spherical plain bearings often experience ingress of contaminants that degrade the bearing. Common contaminants may include sand, mud, and particulate contamination. The contaminants enter the bearing between the outer and inner members and degrade the sliding surface between the outer member inner engagement surface and the inner member outer engagement surface. This problem is especially prevalent for heavy load vehicles used in harsh environments, such as military equipment, construction vehicles, hauling vehicles, mining equipment, and fire trucks. Contamination of the coating composition leads to a rapid increase in the wear rate of the bearing and, in turn, decreases the life of the bearing.

In some instances seals are positioned to extend between the inner member and the outer member to prevent the ingress of contamination between the inner member and the outer member. However, such seals tend to dislodge from anchor points on the inner member and/or the outer member during operational misalignment of the outer member relative to the inner member.

One such bearing application in a heavy load vehicle is the steering linkage which provides an operator with the ability to steer the vehicle in a desired direction. A kingpin is one of the components of the steering linkage. The kingpin attaches a spindle, upon which is mounted a wheel, to a steering axle. In a typical steering linkage, the kingpin is configured as a shaft that engages the inner member of a spherical plain bearing to provide a kingpin and bearing assembly. Typically, the steering linkage of a vehicle includes two kingpin and bearing assemblies.

There exists a need for a seal for a spherical bearing that can mitigate the ingress of contamination and maintain seated during operational misalignment of the outer member relative to the inner member.

### SUMMARY

The present invention resides a spherical bearing assembly as defined in claim 1.

### BRIEF DESCRIPTION OF THE DRAWINGS

FIG. 1 is an illustration of a steering linkage configured for a heavy load vehicle including a kingpin installed therein.
FIG. 2 is an illustration of the steering linkage of FIG. 1 showing kingpin inclination.
FIG. 3A is a side view of a portion of a spherical plain bearing having a seal of the present invention installed thereon.
FIG. 3B is a top view of the spherical plain bearing having a seal installed thereon of FIG. 3A.
FIG. 4A is a cross sectional view the spherical plain bearing having a seal of FIG. 3 taken along line 4A-4A of FIG. 3A.
FIG. 4B is a cross sectional view the spherical plain bearing having a seal of FIG. 4A wherein the inner member is no longer concentric with the outer member.
FIG. 5 is a cross sectional view of the seal of FIG. 4A.
FIG. 6 is a cross sectional view of a spherical bearing in a neutral position and having another embodiment of the seal positioned therein.
FIG. 7 is a cross sectional view of the spherical bearing of FIG. 6 shown in an operationally misaligned positioned and without the seals installed therein.
FIG. 8 is a cross sectional view of a portion of the seal of FIG. 6.
FIG. 9 is a cross sectional view of a portion of the seal of FIG. 6 shown in a fully extended state.
FIG. 10 is an enlarged view of detail 10 of the seal of FIG. 8 shown in a groove in the outer member of the spherical bearing assembly of FIG 6.
FIG. 11 is an enlarged view of detail 11 of the seal of FIG. 8 shown in a groove in the inner member assembly of the spherical bearing assembly of FIG. 6.
FIG. 12 is a cross sectional view of the seal of FIG. 6 shown in a free state.
FIG. 13 is a cross sectional view of the seal of FIG. 6 shown in an extended state.

### DETAILED DESCRIPTION

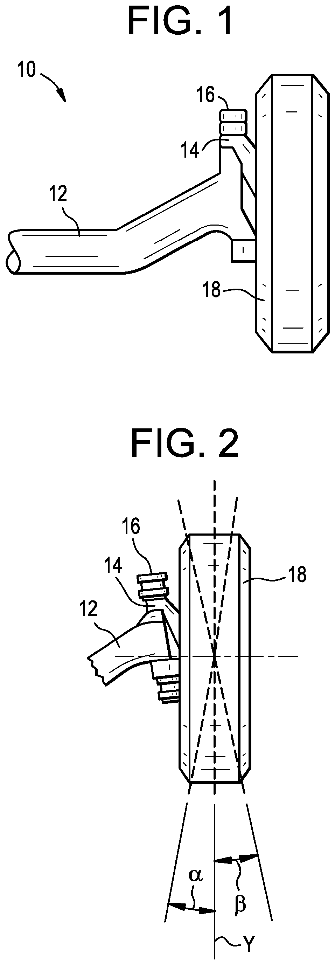

A steering linkage 10 of a heavy load vehicle is shown in FIG. 1 and includes a steering axle 12, a knuckle 14 and a kingpin 16 which attaches a spindle (not shown) and a wheel 18 mounted thereon to the steering axle 12. As shown in FIG. 2, the kingpin is set at a steering axis inclination or kingpin inclination of angle α or β relative to a true vertical line Y. The kingpin inclination provides for returning the steering direction to the straight ahead or center position.

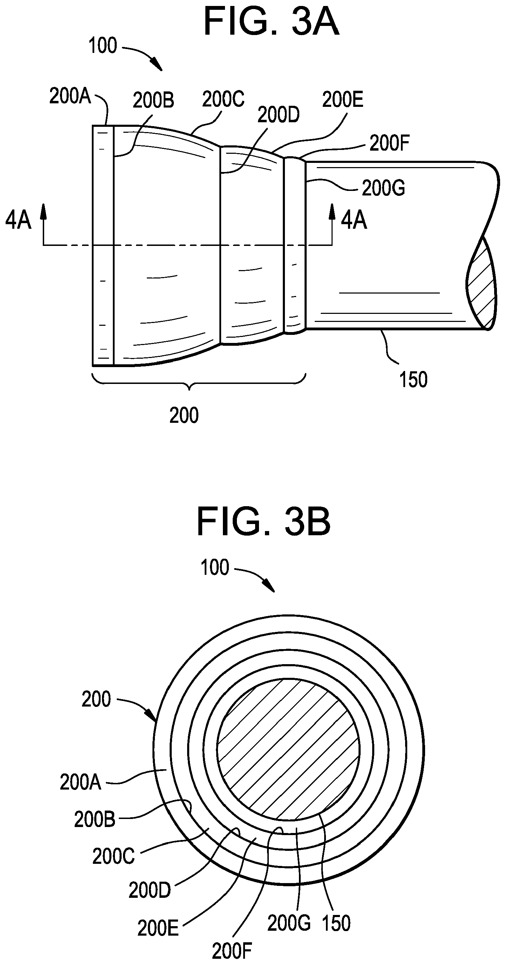

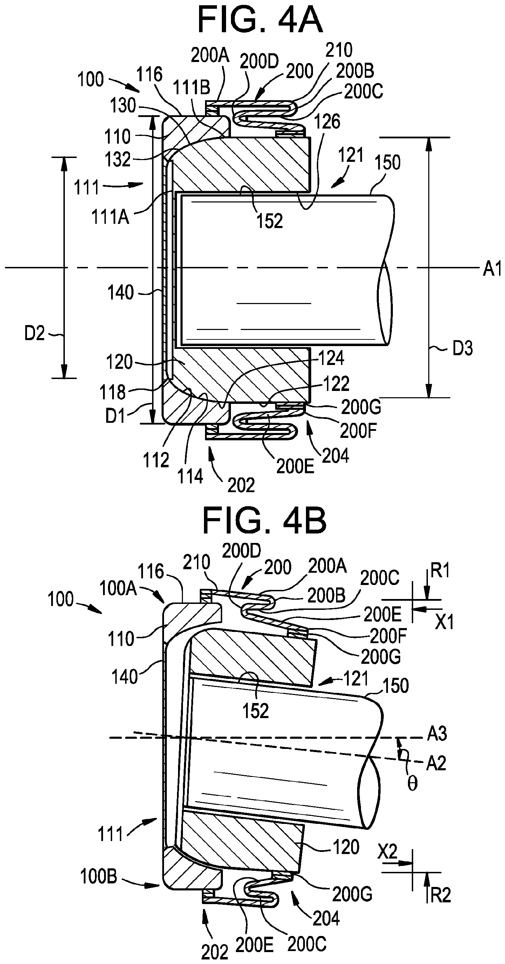

A bearing 100 in accordance with one embodiment of the present invention is shown in FIGS 3A and 3B. Bearing 100 includes a seal 200 of the present invention installed thereon. A shaft 150, for example a kingpin, extends axially outwardly from bearing 100 and seal 200. In the illustrated embodiment, seal 200 includes portions 200A-200G as described below with reference to FIGS. 4A and 4B. FIGS. 4A and 4B show schematically the operating positions of the bearing assembly 100, 200.

As shown in FIGS. 4A and 4B, bearing 100 includes an outer member or outer ring 110 and an inner member or inner ring 120 partially or fully disposed therein. The outer member 110 includes an outer surface 116 defining an outer diameter D1, and a bore 111 extending therethrough. The outer member 110 has a first axial end 111A defining a first inner diameter D2 and a second axial end 111B defining a second inner diameter D3. The outer member 110 further includes an inner surface 112, at least a portion of which defines an inner engagement surface 114. The inner member 120 defines an outer surface 122, at least a portion of which defines an outer engagement surface 124. The inner member 120 further includes a bore 121 therethrough that defines a substantially cylindrical inner surface or inner engagement surface 126 for receiving and engaging an outer surface 152 of shaft 150, for example by press fitting, pinning, staking, or the like. While the inner member 120 is shown and described as having the bore 121 therethrough for receiving the shaft 150 therein, the present invention is not limited in this regard the inner member 120 may be integrally formed with the shaft 150 without departing from the broader aspects of the present invention.

The inner engagement surface 114 is configured or contoured to slidingly engage or receive correspondingly configured or contoured outer engagement surface 124. In one embodiment, first inner diameter D2 of bore 111 is of a magnitude less than that of the second inner diameter D3 such that outer member inner engagement surface 114 is configured or contoured to slidingly engage or receive the correspondingly configured or contoured outer engagement surface 124 of inner member 120. When the inner member 120 is disposed in the outer member 110, an area of engagement 130 is defined by the interface of inner engagement surface 114 and outer engagement surface 124. A lubricant 132, such as for example grease, is disposed within area of engagement 130. The term "lubricant" as used herein includes installing in area of engagement 130, or on one or both of inner engagement surface 114 and outer engagement surface 124, a coating exhibiting low-friction and high-wear properties, a low-friction liner, a self-lubricating liner, a lubricious fabric liner, and the like. Optionally, a seal plate 140 is disposed in a seat 118 of outer member 110 thereby sealing first axial end 111A of bore 111. While the outer member 110 is shown and described as having the seat 118 in which is disposed the seal plate 140, the present invention is not limited in this regard the outer member 110 may be integrally formed with the seal plate 140 without departing from the broader aspects of the present invention.

The inner member 120 is fabricated from a steel or a steel alloy, including but not limited to, AISI 52100, AISI 440C, 4340 or 4130 alloy steel, 17-4PH, 15-5PH, 13PH-8MO. Inner member 120 can be fabricated from other materials that are sufficiently hard or can be sufficiently hardened, for example by heat treating, cold working, work hardening, surface treating and the like. The inner member can be plated or coated, and a self-lubricating treatment can be applied to the contoured surface of the inner member 120.

The outer member 110 is fabricated from a steel or a steel alloy, including but not limited to, 4340, 4130, 17-4PH. 15-5PH, 13PH-8MO, or another suitable material. In some embodiments the material may have a lower hardness than the inner member 120 that allows the outer member 110 to be formed in a press operation around the inner member 120, while still having adequate strength to handle forces during operation of the bearing 100. The outer member 110 can be fabricated from a material that is a sufficient mating surface to a self-lubricating coating composition. The inner member 120 and the outer member 110 can be fabricated from the same or different materials.

As further shown in FIGS. 4A and 4B, bearing 100 includes seal 200 extending between and sealingly engaging the outer member 110 and the inner member 120. The seal 200 inhibits the ingress of contaminants into the bearing 100, particularly the area of engagement 130, and prevents such contaminants from impinging the inner engagement surface 114 and the outer engagement surface 124. In one embodiment and as shown in FIGS. 4A and 4B, the seal 200 includes seven portions, respectively portions 200A-200G. Portion 200A of the seal 200 sealingly engages the outer surface 116 of the outer member 110 at an axial first end 202 of the seal 200. Portion 200G of the seal 200 sealingly engages the outer surface 122 of the inner member 120 at an axial second end of the seal 200. Portions 200B-200F of the seal 200 extend between portions 200A and 200G.

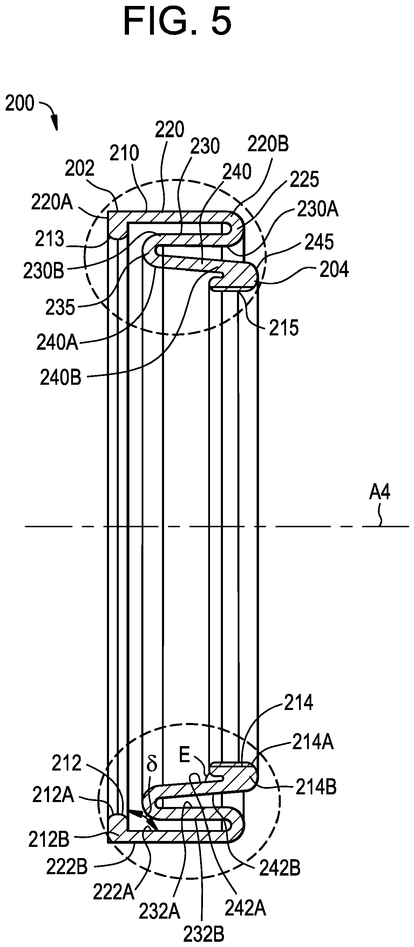

When the inner member 120 is disposed in the outer member 110 as shown in FIG. 4A, each respective central axis coincides at a bearing 100 central axis A1. In this configuration, the seal 200 portions 200A-200G are in a first operating position or a folded position. The inner member 120 and the outer member 110 are rotatable and/or misalignable relative to each other. When the inner member 120 and the outer member 110 are misaligned relative to each other as shown in FIG. 4B, a central axis A2 of the inner member 120 forms an angle θ in relation to a central axis A3 of the outer member 110 of about 45 degrees. In this configuration, the seal 200 portions 200A-200G are in a second operating position or an extended position. Portion 200A of the seal 200 remains sealingly engaged with the outer member 110, portion 200G remains sealingly engaged with the inner member 120, and portions 200B-200F remain extended therebetween as described in detail with reference to FIG. 5. While angle θ is shown and described as being about 45 degrees, the present invention is not limited in this regard as angle θ can be in the range from about -45 degrees to about 45 degrees (i.e., a 90 degree swing) without departing from the broader aspects of the present invention.

When the inner member 120 and the outer member 110 are misaligned relative to each other as shown in FIG. 4B, seal 200 portions 200A-200G move in at least one of a radial direction R1 or R2, or an axial direction X1 or X2. For example, portion 200G remains sealingly engaged with the inner member 120 by moving in the radial direction R1 and the axial direction X2, at a first radial position 100A of the bearing 100, thereby extending portion 200E and contracting portion 200C of the seal 200. Correspondingly, portion 200G remains sealingly engaged with the inner member 120 by moving in the radial direction R1 and the axial direction X1, at a second radial position 100B of the bearing 100, thereby contracting portion 200E of the seal 200.

A detailed cross-sectional view of seal 200 is shown in FIG. 5. The seal 200 includes an annular body 210 having a serpentine cross section terminating respectively at the axial first end 202 and the axial second end 204. The seal body 210 defines a radially outward first leg 220 extending between a first leg axial first end 220A and a first leg axial second end 220B. The seal body 210 defines a radially intermediary second leg 230 extending between a second leg axial first end 230A and a second leg axial second end 230B. The seal body 210 defines a radially inward third leg 240 extending between a third leg axial first end 240A and a third leg axial second end 240B. At the first leg axial second end 220B and the second leg axial first end 230A, the first leg 220 transitions to the second leg 230 through a first curvilinear section or first fold 225. At the second leg axial second end 230B and the third leg axial first end 240A, the second leg 230 transitions to the third leg 240 through a second curvilinear section or second fold 235. At the third leg axial second end 240B, the third leg 240 transitions to a seal lip (a second seal lip 214 as described below) through a third curvilinear section or third fold 245. As further shown in FIG. 5, each of the first fold 225, the second fold 235 and the third fold 245 of the seal body 210 forms a resilient hinge the center of which forms a ring positioned concentrically around a longitudinal axis A4 of the seal body.

The first leg 220 of the seal body 210 defines a first radially inwardly facing surface 222A and a first radially outward facing surface 222B. The second leg 230 of the seal body 210 defines a second radially inwardly facing surface 232A and a second radially outward facing surface 232B. The third leg 240 of the seal body 210 defines a third radially inwardly facing surface 242A and a third radially outward facing surface 242B.

The axial first end 202 of the seal body 210 defines a first seal lip 212 configured to sealingly engage the outer surface 116 of the outer member 110. The first seal lip 212 extends radially inwardly from the first leg 220 of the seal body 210. In one embodiment and as shown in FIG. 5, the first seal lip 212 extends radially inwardly from the first leg 220 forming an angle δ therebetween of about 90 degrees. While angle δ is shown and described as being of about 90 degrees, the present invention is not limited in this regard as angle δ can be in the range from less than 90 degrees up to 180 degrees without departing from the broader aspects of the present invention. First seal lip 212 defines a fourth radially inwardly facing surface 212A and a fourth radially outward facing surface 212B that abuts first radially inwardly facing surface 222A of first leg 220. In one embodiment, first seal lip 212 is integrally formed with seal body 210. In one embodiment, first seal lip 212 comprises a first seal retaining ring 213 fixedly attached to first radially inwardly facing surface 222A, for example by use of an adhesive.

The axial second end 204 of the seal body 210 defines a second seal lip 214 configured to sealingly engage the outer surface 122 of the outer member 110. The second seal lip 214 extends radially inwardly from the third leg 240 of the seal body 210. In one embodiment and as shown in FIG. 5, the second seal lip 214 extends radially inwardly from the third leg 240 forming an angle ε therebetween of about 90 degrees. While angle ε is shown and described as being about 90 degrees, the present invention is not limited in this regard as angle ε can be in the range from less than 90 degrees up to 180 degrees without departing from the broader aspects of the present invention. The second seal lip 214 defines a fifth radially inwardly facing surface 214A and a fifth radially outward facing surface 214B that abuts the third radially inwardly facing surface 242A of the third leg 240. In one embodiment, the second seal lip 214 is integrally formed with the seal body 210. In one embodiment, the second seal lip 214 comprises a second seal retaining ring 215 fixedly attached to the third radially inwardly facing surface 242A, for example by use of an adhesive.

The seal body 210 of seal 200 is fabricated from a suitably flexible, pliable and resilient material. In one embodiment, the seal body 210 is formed as a one-piece unit by a molding process.

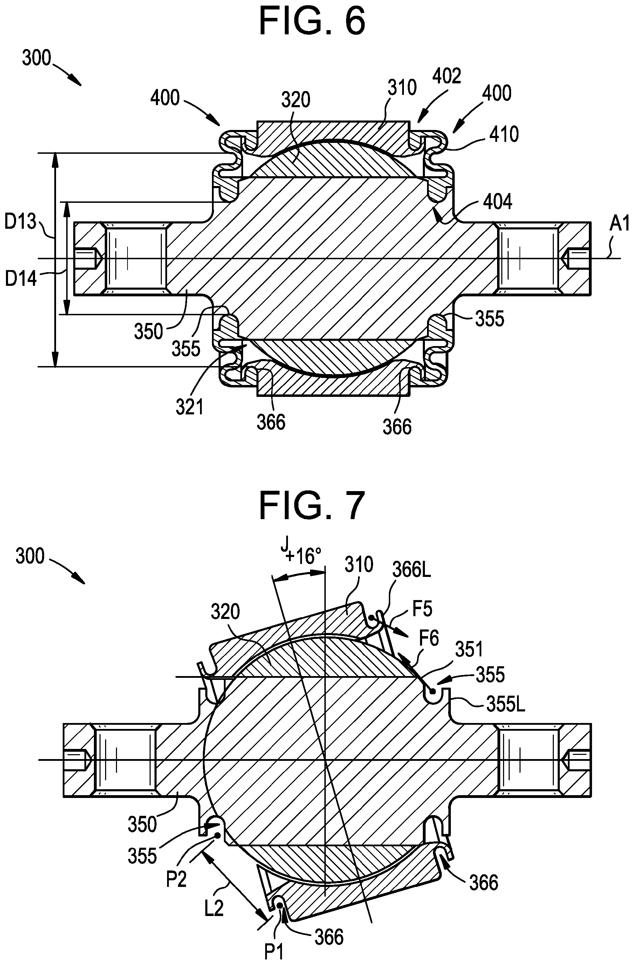

The spherical bearing and seal of FIG. 6 are similar to the bearing 100 and seal 200 of FIG. 4A, thus similar elements are designated with similar reference numbers but replacing the first digit "1" with the numeral "3" and replacing the first digit "2" with the numeral "4". As shown in FIG. 6, a spherical bearing assembly 300 includes an outer member 310 having a first radially outward facing groove 366 proximate each axial end thereof. The spherical bearing assembly 300 includes an inner member assembly that includes a ball 320 having a bore 321 extending there through. A shaft 350 is disposed in the bore, for example, press fit into the bore 321. The inner member assembly is disposed at least partially in the outer member 310. For example, the ball 320 is disposed in the outer member 310. The shaft 350 defines a second radially outward facing second groove 355 formed therein. While the inner member assembly is shown and described as including the ball 320 and the shaft 350 with the second radially outward facing second groove 355 formed on the shaft 350, the present invention is not limited in this regard as the inner member assembly may be one piece construction that has the ball formed integrally into the shaft.

As shown in FIG. 6, a seal 400 defines an annular body 410 having a serpentine cross section. The seal 400 extends between the inner member 320 and the outer member 310. The annular body 410 extends between a first end 402 to a second end 404 thereof. The second end 404 is positioned radially inward from the first end 402. The first end 402 is anchored in the first radially outward facing groove 366 and the second end 404 is anchored in the second radially outward facing groove 355. As described further herein the seal 400 includes one or more anchor features defined by the annular body 410. Each of the anchor features are configured to prevent the annular body 410 from dislodging from the spherical bearing 300.

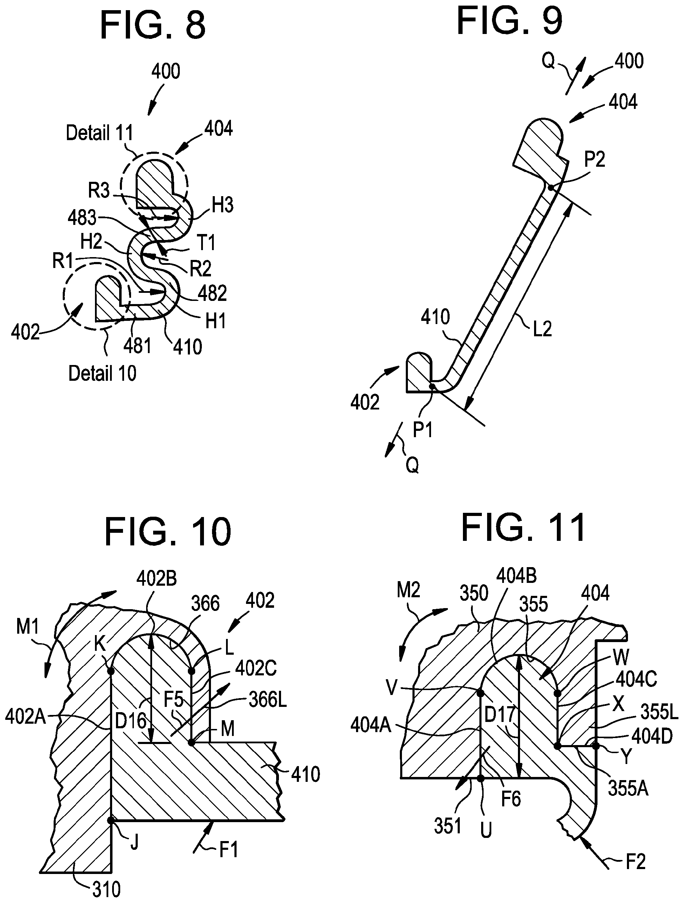

As best shown in FIG. 8, the serpentine cross section is defined by three rings, for example, a first ring 481, a second ring 482 and a third ring 483 positioned concentrically around a longitudinal axis A1 (axis shown in FIG. 6) of the annular body 410. While the serpentine cross section is shown and describe as having the three rings 481, 481 and 483, the present invention is not limited in this regard as two rings or more than three rings may be employed. Adjacent ones of the three rings 481, 482 and 483 are flexibly joined by a resilient hinge H1, H2 and H3 respectively. For example, the first ring 481 and the second ring 482 are joined by the flexible hinge H1; the second ring 482 and the third ring 483 are joined by the flexible hinge H2. The flexible hinge H3 joins the third ring 483 to the second end 404. The annular body 410 is extendable between a folded position which occurs in a relaxed free state (FIGS. 6 and 8) and an extended position, for example when the outer member 310 is operationally misaligned relative to the inner member assembly as shown in FIG. 7.

As shown in FIG. 9, in one embodiment the anchor feature is defined by the annular body 410 having an extended length L1 that is at least 30 percent greater than a maximum misalignment length L2 of the spherical bearing 400, as shown in FIG. 7. For example, as shown in FIG. 7, the misalignment length L2 is defined as the length between point P1 located at an edge of the first radially outward facing groove 366 and a point P2 located at an edge of the second radially outward facing groove 355, when the outer member 310 is at a maximum angle J (e.g., 16 degrees) of operational misalignment relative to the inner member assembly.

In one embodiment, as shown in FIG. 8 the anchor feature is defined by the annular body 410 having a thickness T1 and the resilient hinges H1, H2 and H3 defining a radius of curvature R1, R2 and R3, respectively and wherein each of the radii of curvature R1, R2 and R3 have a magnitude that is at least as great as the thickness T1.

As illustrated in FIG. 8, examples of the anchor feature include an anti-rotation device formed on the first end 402 and/or the second end 404 of the annular body 410. For example, as illustrated in FIG. 10, the anti-rotation device formed on the first end 402 is defined by a first flat surface 402A extending between point J and point K; an arcuate surface 402B (e.g., circular cross section) extending from point K to point L; and a second flat surface 402C extending from point L to point M. As shown in FIG. 10, the groove 366 has a shape complementary to that of the anti-rotation device formed on the first end 402. The anti-rotation device formed on the first end 402 is configured to resist rotation in the direction of the arrow M1 in the groove 366 in response to a force F1 applied to the annular body 410. The groove 366 defines a first lip 366L that extends radially outward from a curved portion of the groove 366. The first lip 366L is configured to prevent the annular body 410 from dislodging from the groove 366 of the spherical plain bearing. For example, as shown in FIGS. 7 and 10, the groove 366 has a depth D16 (FIG. 10) configured so that the lip 366L extends radially outward beyond a position of a force vector F5 that results from the seal 400 being in an extended position due to the operational misalignment shown in FIG. 7.

Referring to FIG. 11, the anti-rotation device formed on the second end 404 is defined by a third flat surface 404A extending between point U and point V; an arcuate surface 404B (e.g., circular cross section) extending from point V to point W; a fourth flat surface 404C extending from point W to point X; and a shoulder 404D extending outwardly from the fourth flat surface 404C (e.g., at an angle of 90 degrees) between point X and point Y. As shown in FIG. 11, the groove 355 has a shape complementary to that of the anti-rotation device formed on the second end 404. The anti-rotation device formed on the second end 402 is configured to resist rotation in the direction of the arrow M2 in the groove 355 in response to a force F2 applied to the annular body 410. An abutment surface 355A extends axially outward from a flat side of the groove (e.g., at an angle of 90 degrees). The abutment surface 355A cooperates with the shoulder 404D to prevent the annular body 410 from dislodging from the groove 355 in the spherical plain bearing 300. The groove 355 defines a second lip 355L that extends radially outward from a curved portion of the groove 355. The second lip 355L is configured to prevent the annular body 410 from dislodging from the groove 355 of the spherical plain bearing. The second lip 355L is configured to protect the seal 410 from damage, such as by objects impinging or impacting the spherical bearing 300. As shown in FIGS. 7 and 11, the groove 355 has a depth D17 (FIG. 11) configured so that a shoulder 351 extends radially outward beyond a position of a force vector F6 that results from the seal 400 being in an extended position due to the operational misalignment shown in FIG. 7.

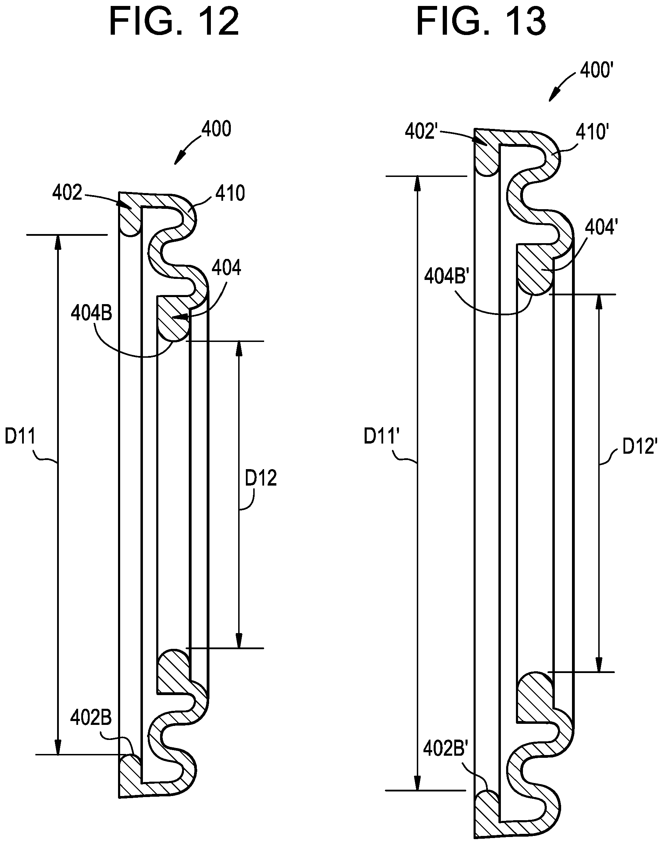

Referring to FIG. 12, the annular body 410 is shown in a free state (e.g., not stretched, not installed on the spherical bearing). In the free state, the annular body 410 has a first inside diameter D11 measured between opposing surfaces of the arcuate surface 402B proximate the first end 402; and a second inside diameter D12 measured between opposing surfaces of the arcuate surface 404B proximate the second end 404.

Referring to FIG. 13, the annular body 410' is shown in an expanded state corresponding to when the annular body 410' is installed in the groove 355 and the groove 366 of the spherical bearing 300 of FIG. 6. In the expanded state, the annular body 410' has a first inside diameter D11' measured between opposing surfaces of the arcuate surface 402B' and a second inside diameter D12' measured between opposing surfaces of the arcuate surface 404B'. As shown in FIG. 6, the groove 366 defines a diameter D13 between measured between radially inward most portions of the groove 366; and the groove 355 defines a diameter D14 between measured between radially inward most portions of the groove 355. The inside diameter D11' is about equal to the diameter D13; and the diameter D12' is about equal to the diameter D14. The annular body 410 is fabricated from a suitably flexible, pliable, elastic and resilient material that when stretched (e.g., stretched radially outward) tends to return to a radially inward free state.

In one embodiment, the anchor feature is defined by the annular body 410 having an inside diameter D11 in a free state (FIG. 12) that is a minimum of 15% less than (e.g., about 15 to 20 percent less than) the inside diameter D11' in an expanded state (FIG. 13) when installed on the spherical bearing 300 of FIG. 6, to securely engage the first end 402 in the groove 366 without any slippage or movement of the first end 402 relative to the groove 366 during operational misalignment of the outer member 310 relative to the inner member assembly (e.g., the ball 320 and the shaft 350) as shown in FIG. 7. Due to the resiliency and elasticity of the annular body 410 and the stretching of the annular body 410', the annular body 410 is biased towards the free state and when installed in the groove 366 generates radially inwardly directed forces to secure the first end 402 in the groove 366.

In one embodiment, the anchor feature is defined by the annular body 410 having an inside diameter D12 in a free state (FIG. 12) that is a minimum of 15% less than (e.g., about 15 to 20 percent less than) the inside diameter D12' in an expanded state (FIG. 13) when installed on the spherical bearing 300 of FIG. 6, to securely engage the second end 404 in the groove 355 without any slippage or movement of the second end 404 relative to the groove 355 during operational misalignment of the outer member 310 relative to the inner member assembly (e.g., the ball 320 and the shaft 350) as shown in FIG. 7. Due to the resiliency and elasticity of the annular body 410 and the stretching of the annular body 410', the annular body 410 is biased towards the free state and when installed in the groove 355 generates radially inwardly directed forces to secure the second end 402 in the groove 355.

In one embodiment, the anchor feature is defined by the annular body 410 having an inside diameter D11 in a free state (FIG. 12) that is about 4 to 6 percent less than the inside diameter D11' in an expanded state (FIG. 13) when installed on the spherical bearing 300 of FIG. 6, to permit sliding engagement of the first end 402 in the groove 366 during operational misalignment of the outer member 310 relative to the inner member assembly (e.g., the ball 320 and the shaft 350) as shown in FIG. 7. In one embodiment, the anchor feature is defined by the annular body 410 having an inside diameter D11 in a free state (FIG. 12) that is about 3 to 10 percent less than the inside diameter D11' in an expanded state (FIG. 13) when installed on the spherical bearing 300 of FIG. 6, to permit sliding engagement of the first end 402 in the groove 366 during operational misalignment of the outer member 310 relative to the inner member assembly (e.g., the ball 320 and the shaft 350) as shown in FIG. 7. Due to the resiliency and elasticity of the annular body 410 and the stretching of the annular body 410', the annular body 410 is biased towards the free state and when installed in the groove 366 generates radially inwardly directed forces to slidingly secure the first end 402 in the groove 366.

In one embodiment, the anchor feature is defined by the annular body 410 having an inside diameter D12 in a free state (FIG. 12) that is about 4 to 6 percent less than the inside diameter D12' in an expanded state (FIG. 13) when installed on the spherical bearing 300 of FIG. 6 to permit sliding engagement of the second end 404 in the groove 355 during operational misalignment of the outer member 310 relative to the inner member assembly (e.g., the ball 320 and the shaft 350) as shown in FIG. 7. In one embodiment, the anchor feature is defined by the annular body 410 having an inside diameter D12 in a free state (FIG. 12) that is about 3 to 10 percent less than the inside diameter D12' in an expanded state (FIG. 13) when installed on the spherical bearing 300 of FIG. 6 to permit sliding engagement of the second end 404 in the groove 355 during operational misalignment of the outer member 310 relative to the inner member assembly (e.g., the ball 320 and the shaft 350) as shown in FIG. 7. Due to the resiliency and elasticity of the annular body 410 and the stretching of the annular body 410', the annular body 410 is biased towards the free state and when installed in the groove 355 generates radially inwardly directed forces to slidingly secure the second end 404 in the groove 355.

It is contemplated that the various combinations of secure engagement and sliding engagement of the first end 402 in the groove 366 and of the second end 404 in the groove 355 may be employed, including: 1) the first end 402 is securely engaged in the groove 366 and the second end 404 is securely engaged in the groove 355; 2) the first end 402 is slidingly engaged in the groove 366 and the second end 404 is slidingly engaged in the groove 355; 3) the first end 402 is securely engaged in the groove 366 and the second end 404 is slidingly engaged in the groove 355; and 4) the first end 402 is slidingly engaged in the groove 366 and the second end 404 is securely engaged in the groove 355.

The seals 200, 400 accommodate a more efficient and economical manufacturing (e.g., molding) process than prior art seals because the seals 200, 400 comprises fewer curvilinear sections or folds than prior art seals. The configuration of the seal body 210, 410 provides a more compact seal envelope than prior art seals. The comparatively compact configuration of the seal body 210, 410 exhibits less interference with other components due to its smaller envelope that the envelope of prior art seals, both in the normal operating position and the extended operating position. Unexpectedly, the seal body 210, 410 provides improved adhesion to the inner member 120, 320 and the outer member 110, 310 of bearing 100, 300.

Although the present invention has been disclosed and described with reference to certain embodiments thereof, it should be noted that other variations and modifications may be made, and it is intended that the following claims cover the variations and modifications within the true scope of the invention.

## Claims

1. A spherical bearing assembly comprising:
a spherical bearing (100, 300) comprising:
an outer member (110, 310) having a first radially outward facing groove (366) proximate an axial end thereof, and
an inner member assembly at least partially disposed in the outer member (110, 310), the inner member assembly having a second radially outward facing groove (355) formed therein;
and a seal (200, 400) comprising
an annular body (210; 410) having a serpentine cross section, the annular body (210; 410) extending between a first end (202; 402) and a second end (204; 404) thereof, the second end (204; 404) being positioned radially inward from the first end (202; 402);
the annular body (210; 410) being extendable between a folded position and an extended position; and
at least one anchor feature defined by the annular body (210; 410), the at least one anchor feature configured to prevent the annular body (210; 410) from dislodging from the spherical bearing (100; 300),
wherein the serpentine cross section being defined in a folded position by at least two axial extending rings or legs (220, 230, 240; 481, 482, 483) positioned concentrically around a longitudinal axis (A1) of the annular body (210; 410), adjacent ones of the at least two axial extending rings or legs (220, 230, 240; 481, 482, 483) being flexibly joined by a resilient hinge (225, 235, 245; H1, H2, H3),
wherein the seal (200, 400) extends between the inner member assembly and the outer member (310), the first end (202, 402) of the annular seal body being anchored in the first radially outward facing groove (366) and the second end (204, 404) of the annual seal body being anchored in the second radially outward facing groove (355), **characterized in that** the second radially outward facing groove (355) includes a lip (355L), that extends radially outward from a curved portion of the second radially outward facing groove (355), configured to protect the seal from damage, wherein the second radially outward facing groove (355) includes a shoulder (351) configured to prevent the annular body from dislodging from the spherical bearing (300), wherein the second radially outward facing groove (355) has a depth (D17) configured so that the shoulder (351) extends radially outward beyond a position of a force vector (F6) that results from the seal (400) being in an extended position due to operational misalignment of the spherical bearing.

2. The spherical bearing assembly of claim 1, wherein the first radially outward facing groove (366) includes a lip (366L) configured to prevent the annular body from dislodging from the spherical bearing (300) and wherein the first radially outward facing groove (366) has a depth (D16) configured so that the first lip (366L) extends radially outward beyond a position of a force vector (F5) that results from the seal (400) being in an extended position due to operational misalignment of the spherical bearing.

3. The spherical bearing assembly of claim 1, wherein in the seal (200, 400), the at least one anchor feature comprises the annular body (210; 410) having an extended length that is at least 30 percent greater than a maximum misalignment length of the spherical bearing (100; 300).

4. The spherical bearing assembly of claim 1, wherein in the seal (200, 400) the at least one anchor feature comprises the annular body (210; 410) having a thickness (T1) and the resilient hinge (225, 235, 245; H1, H2, H3) defining a radius (R1, R2, R3) of curvature at least as great as the thickness (T1).

5. The spherical bearing assembly of claim 1, wherein in the seal (200, 400), the at least one anchor feature comprises the annular body (410) including a first anti-rotation device on the first end (402) and a second anti-rotation device on the second end (404), wherein the first anti-rotation device comprises a first flat surface (402A) extending into an arcuate surface (402B) which extends into a second flat surface (402C) and the second anti-rotation device comprises a third flat surface (404A) extending into an arcuate surface (404B) which extends into a fourth flat surface (404C) and having a shoulder (404D) extending outwardly from the fourth flat surface (404C).

6. The spherical bearing assembly of claim 1, wherein in the seal (200, 400), wherein the at least one anchor feature comprises the annular body (410) having an inside diameter (D11, D11', D12, D12'), wherein the inside diameter (D11, D12) in a free state that is at least 15 percent less than the inside diameter (D11', D12') in an expanded state when installed on the spherical bearing (300).

7. The spherical bearing assembly of claim 6, wherein in the seal (200, 400), the inside diameter (D11, D11') is located proximate the first end (402).

8. The spherical bearing assembly of claim 6, wherein in the seal (200, 400), the inside diameter (D12, D12') is located proximate the second end (404).

9. The spherical bearing assembly of claim 1, wherein in the seal (200, 400), the at least one anchor feature comprises the annular body (410) having an inside diameter (D11, D11', D12, D12'), wherein the inside diameter (D11, D12) in a free state that is about 3 to 10 percent less than the inside diameter (D11', D12') in an expanded state when installed on the spherical bearing (300).

10. The spherical bearing assembly of claim 9, wherein in the seal (200, 400), the inside diameter (D11, D11') is located proximate the first end (402).

11. The spherical bearing assembly of claim 9, wherein in the seal (200, 400), the inside diameter (D12, D12') is located proximate the second end (404).

## Patentansprüche

1. Pendelkugellageranordnung, umfassend:
ein Pendelkugellager (100, 300), umfassend:
ein äußeres Element (110, 310), das in der Nähe eines axialen Endes eine erste radial nach außen weisende Nut (366) aufweist, und
eine innere Elementanordnung, die zumindest teilweise in dem äußeren Element (110, 310) angeordnet ist, wobei die innere Elementanordnung eine zweite radial nach außen weisende Nut (355) aufweist, die darin ausgebildet ist;
und eine Dichtung (200, 400), umfassend
einen ringförmigen Körper (210; 410), der einen gewundenen Querschnitt aufweist, wobei sich der ringförmige Körper (210; 410) zwischen einem ersten Ende (202; 402) und einem zweiten Ende (204; 404) desselben erstreckt, wobei das zweite Ende (204; 404) radial einwärts vom ersten Ende (202; 402) positioniert ist;
wobei der ringförmige Körper (210; 410) zwischen einer eingefalteten Position und einer gestreckten Position ausziehbar ist; und
mindestens ein Ankermerkmal, das durch den ringförmigen Körper (210; 410) definiert ist, wobei das mindestens eine Ankermerkmal dazu konfiguriert ist, ein Herausrutschen des ringförmigen Körpers (210; 410) aus dem Pendelkugellager (100; 300) zu verhindern,
wobei der gewundene Querschnitt in einer eingefalteten Position durch mindestens zwei sich axial erstreckende Ringe oder Schenkel (220, 230, 240; 481, 482, 483) definiert ist, die konzentrisch rings um eine Längsachse (A1) des ringförmigen Körpers (210; 410) angeordnet sind, wobei benachbarte der mindestens zwei sich axial erstreckenden Ringe oder Schenkel (220, 230, 240; 481, 482, 483) durch ein elastisches Scharnier (225, 235, 245; H1, H2, H3) flexibel verbunden sind,
wobei sich die Dichtung (200, 400) zwischen der inneren Elementanordnung und dem äußeren Element (310) erstreckt, das erste Ende (202, 402) des ringförmigen Dichtungskörpers in der ersten radial nach außen weisenden Nut (366) verankert ist und das zweite Ende (204, 404) des ringförmigen Dichtungskörpers in der zweiten radial nach außen weisenden Nut (355) verankert ist, **dadurch gekennzeichnet, dass** die zweite radial nach außen weisende Nut (355) eine Lippe (355L) aufweist, die sich aus einem gekrümmten Bereich der zweiten radial nach außen weisenden Nut (355) radial nach außen erstreckt und dazu konfiguriert ist, die Dichtung vor Beschädigung zu schützen, wobei die zweite radial nach außen weisende Nut (355) eine Schulter (351) aufweist, die dazu konfiguriert ist, ein Herausrutschen des ringförmigen Körpers aus dem Pendelkugellager (300) zu verhindern, wobei die zweite radial nach außen weisende Nut (355) eine Tiefe (D17) aufweist, die so konfiguriert ist, dass sich die Schulter (351) radial nach außen über eine Position eines Kraftvektors (F6) hinaus erstreckt, welcher daraus resultiert, dass sich die Dichtung (400) aufgrund einer operativen Fehlausrichtung des Pendelkugellagers in einer gestreckten Position befindet.

2. Pendelkugellageranordnung nach Anspruch 1, wobei die erste radial nach außen weisende Nut (366) eine Lippe (366L) aufweist, die dazu konfiguriert ist, ein Herausrutschen des ringförmigen Körpers aus dem Pendelkugellager (300) zu verhindern, und wobei die erste radial nach außen weisende Nut (366) eine Tiefe (D16) aufweist, die so konfiguriert ist, dass sich die erste Lippe (366L) radial nach außen über eine Position eines Kraftvektors (F5) hinaus erstreckt, welcher daraus resultiert, dass sich die Dichtung (400) aufgrund einer operativen Fehlausrichtung des Pendelkugellagers in einer gestreckten Position befindet.

3. Pendelkugellageranordnung nach Anspruch 1, wobei in der Dichtung (200, 400) das mindestens eine Ankermerkmal umfasst, dass der ringförmige Körper (210; 410) eine gestreckte Länge aufweist, die mindestens 30 Prozent größer als eine maximale Fehlausrichtungslänge des Pendelkugellagers (100; 300) ist.

4. Pendelkugellageranordnung nach Anspruch 1, wobei in der Dichtung (200, 400) das mindestens eine Ankermerkmal umfasst, dass der ringförmige Körper (210; 410) eine Dicke (T1) aufweist und das elastische Scharnier (225, 235, 245; H1, H2, H3) einen Krümmungsradius (R1, R2, R3) definiert, der mindestens so groß wie die Dicke (T1) ist.

5. Pendelkugellageranordnung nach Anspruch 1, wobei in der Dichtung (200, 400) das mindestens eine Ankermerkmal umfasst, dass der ringförmige Körper (410) eine erste Verdrehsicherungsvorrichtung an dem ersten Ende (402) und eine zweite Verdrehsicherungsvorrichtung an dem zweiten Ende (404) aufweist, wobei die erste Verdrehsicherungsvorrichtung eine erste ebene Oberfläche (402A) umfasst, die in eine bogenförmige Oberfläche (402B) übergeht, welche in eine zweite ebene Oberfläche (402C) übergeht, und die zweite Verdrehsicherungsvorrichtung eine dritte ebene Oberfläche (404A) umfasst, die in eine bogenförmige Oberfläche (404B) übergeht, welche in eine vierte ebene Oberfläche (404C) übergeht, und eine Schulter (404D) aufweist, die sich ausgehend von der vierten ebenen Oberfläche (404C) nach außen erstreckt.

6. Pendelkugellageranordnung nach Anspruch 1, wobei in der Dichtung (200, 400) das mindestens eine Ankermerkmal umfasst, dass der ringförmige Körper (410) einen Innendurchmesser (D11, D11', D12, D12') aufweist, wobei der Innendurchmesser (D11, D12) in einem freien Zustand mindestens 15 Prozent kleiner als der Innendurchmesser (D11', D12') in einem expandierten Zustand bei Installation auf dem Pendelkugellager (300) ist.

7. Pendelkugellageranordnung nach Anspruch 6, wobei sich in der Dichtung (200, 400) der Innendurchmesser (D11, D11') in der Nähe des ersten Endes (402) befindet.

8. Pendelkugellageranordnung nach Anspruch 6, wobei sich in der Dichtung (200, 400) der Innendurchmesser (D12, D12') in der Nähe des zweiten Endes (404) befindet.

9. Pendelkugellageranordnung nach Anspruch 1, wobei in der Dichtung (200, 400) das mindestens eine Ankermerkmal umfasst, dass der ringförmige Körper (410) einen Innendurchmesser (D11, D11', D12, D12') aufweist, wobei der Innendurchmesser (D11, D12) in einem freien Zustand ungefähr 3 bis 10 Prozent kleiner als der Innendurchmesser (D11', D12') in einem expandierten Zustand bei Installation auf dem Pendelkugellager (300) ist.

10. Pendelkugellageranordnung nach Anspruch 9, wobei sich in der Dichtung (200, 400) der Innendurchmesser (D11, D11') in der Nähe des ersten Endes (402) befindet.

11. Pendelkugellageranordnung nach Anspruch 9, wobei sich in der Dichtung (200, 400) der Innendurchmesser (D12, D12') in der Nähe des zweiten Endes (404) befindet.

## Revendications

1. Ensemble de palier sphérique comprenant :
un palier sphérique (100, 300) comprenant :
un élément externe (110, 310) ayant une première rainure orientée radialement vers l'extérieur (366) à proximité d'une extrémité axiale de celui-ci, et
un ensemble d'élément interne disposé au moins partiellement dans l'élément externe (110, 310), l'ensemble d'élément interne ayant une seconde rainure (355) orientée radialement vers l'extérieur formée à l'intérieur de celui-ci ;
et un joint d'étanchéité (200, 400) comprenant
un corps annulaire (210 ; 410) ayant une section transversale en serpentin, le corps annulaire (210 ; 410) s'étendant entre une première extrémité (202 ; 402) et une seconde extrémité (204 ; 404) de celui-ci, la seconde extrémité (204 ; 404) étant positionnée radialement vers l'intérieur à partir de la première extrémité (202 ; 402) ;
le corps annulaire (210 ; 410) pouvant être étendu entre une position repliée et une position étendue ; et
au moins un élément d'ancrage défini par le corps annulaire (210 ; 410), le au moins un élément d'ancrage étant configuré pour empêcher le corps annulaire (210 ; 410) de se déloger du palier sphérique (100 ; 300),
dans lequel la section transversale en serpentin est définie dans une position repliée par au moins deux anneaux ou pattes s'étendant axialement (220, 230, 240 ; 481, 482, 483) positionné(e)s de manière concentrique autour d'un axe longitudinal (Al) du corps annulaire (210 ; 410), certain(e)s adjacent(e)s parmi les au moins deux anneaux ou pattes s'étendant axialement (220, 230, 240 ; 481, 482, 483) étant relié(e)s de manière flexible par une articulation élastique (225, 235, 245 ; H1, H2, H3),
dans lequel le joint d'étanchéité (200, 400) s'étend entre l'ensemble d'élément interne et l'élément externe (310), la première extrémité (202, 402) du corps de joint d'étanchéité annulaire étant ancrée dans la première rainure orientée radialement vers l'extérieur (366) et la seconde extrémité (204, 404) du corps de joint d'étanchéité annulaire étant ancrée dans la seconde rainure orientée radialement vers l'extérieur (355), **caractérisée en ce que** la seconde rainure orientée radialement vers l'extérieur (355) comprend une lèvre (355L), qui s'étend radialement vers l'extérieur à partir d'une partie incurvée de la seconde rainure orientée radialement vers l'extérieur (355), configurée pour protéger le joint d'étanchéité à l'encontre d'une détérioration, dans lequel la seconde rainure orientée radialement vers l'extérieur (355) comprend un épaulement (351) configuré pour empêcher le corps annulaire de se déloger du palier sphérique (300), dans lequel la seconde rainure orientée radialement vers l'extérieur (355) a une profondeur (D17) configurée de telle sorte que l'épaulement (351) s'étend radialement vers l'extérieur au-delà d'une position d'un vecteur de force (F6) qui résulte du joint d'étanchéité (400) se trouvant dans une position étendue en raison d'un défaut d'alignement opérationnel du palier sphérique.

2. Ensemble de palier sphérique selon la revendication 1, dans lequel la première rainure orientée radialement vers l'extérieur (366) comprend une lèvre (366L) configurée pour empêcher le corps annulaire de se déloger du palier sphérique (300) et dans lequel la première rainure orientée radialement vers l'extérieur (366) a une profondeur (D16) configurée de telle sorte que la première lèvre (366L) s'étend radialement vers l'extérieur au-delà d'une position d'un vecteur de force (F5) qui résulte du joint d'étanchéité (400) se trouvant dans une position étendue en raison d'un défaut d'alignement opérationnel du palier sphérique.

3. Ensemble de palier sphérique selon la revendication 1, dans lequel dans le joint d'étanchéité (200, 400), le au moins un élément d'ancrage comprend le corps annulaire (210 ; 410) ayant une longueur étendue qui est au moins 30 pour cent supérieure à une longueur de défaut d'alignement maximum du palier sphérique (100 ; 300).

4. Ensemble de palier sphérique selon la revendication 1, dans lequel dans le joint d'étanchéité (200, 400), le au moins un élément d'ancrage comprend le corps annulaire (210 ; 410) ayant une épaisseur (T1) et l'articulation élastique (225, 235, 245) ; H1, H2, H3) définissant un rayon (R1, R2, R3) de courbure au moins de taille égale à l'épaisseur (T1).

5. Ensemble de palier sphérique selon la revendication 1, dans lequel dans le joint d'étanchéité(200, 400), le au moins un élément d'ancrage comprend le corps annulaire (410) comprenant un premier dispositif anti-rotation sur la première extrémité (402) et un second dispositif anti-rotation sur la seconde extrémité (404), dans lequel le premier dispositif anti-rotation comprend une première surface plane (402A) s'étendant dans une surface arquée (402B) qui s'étend dans une deuxième surface plane (402C) et le second dispositif anti-rotation comprend une troisième surface plane (404A) s'étendant dans une surface arquée (404B) qui s'étend dans une quatrième surface plane (404C) et ayant un épaulement (404D) s'étendant vers l'extérieur à partir de la quatrième surface plane (404C).

6. Ensemble de palier sphérique selon la revendication 1, dans lequel dans le joint d'étanchéité (200, 400), dans lequel le au moins un élément d'ancrage comprend le corps annulaire (410) ayant un diamètre intérieur (D11, D11', D12, D12'), dans lequel le diamètre intérieur (D11, D12), dans un état libre, est au moins 15 pour cent inférieur au diamètre intérieur (D11', D12') dans un état déployé lorsqu'il est installé sur le palier sphérique (300).

7. Ensemble de palier sphérique selon la revendication 6, dans lequel dans le joint d'étanchéité (200, 400), le diamètre intérieur (D11, D11') est situé à proximité de la première extrémité (402).

8. Ensemble de palier sphérique selon la revendication 6, dans lequel dans le joint d'étanchéité (200, 400), le diamètre intérieur (D12, D12') est situé à proximité de la seconde extrémité (404).

9. Ensemble de palier sphérique selon la revendication 1, dans lequel dans le joint d'étanchéité (200, 400), le au moins un élément d'ancrage comprend le corps annulaire (410) ayant un diamètre intérieur (D11, D11', D12, D12'), dans lequel le diamètre intérieur (D11, D12), dans un état libre, est d'environ 3 à 10 pour cent inférieur au diamètre intérieur (D11', D12') dans un état déployé lorsqu'il est installé sur le palier sphérique (300).

10. Ensemble de palier sphérique selon la revendication 9, dans lequel dans le joint d'étanchéité (200, 400), le diamètre intérieur (D11, D11') est situé à proximité de la première extrémité (402).

11. Ensemble de palier sphérique selon la revendication 9, dans lequel dans le joint d'étanchéité (200, 400), le diamètre intérieur (D12, D12') est situé à proximité de la seconde extrémité (404).
